# DEMANDE DE BREVET EUROPEEN

(11) **EP 1 168 189 A1**
(43) Date de publication de la demande: **02.01.2002**
(21) Numéro de dépôt: 01401630.7
(22) Date de dépôt: 20.06.2001
(51) Int. Cl.: G06F 15/02

(54) **Procédé et dispositif de conversion de monnaie.**

(30) Priorité: 20.06.2000 FR 0007858
(71) Demandeur: Moulin, Jean-Claude, 93300 Aubervilliers (FR)
(72) Inventeur: Moulin, Jean-Claude, 93300 Aubervilliers (FR)
(74) Mandataire: Debay, Yves

(57) **Abrégé**

La présente invention concerne un procédé calcul et conversion de rendu de monnaie utilisable par un dispositif de calcul comprenant des moyens (13) de mémorisation, des moyens (11) d'affichage et des moyens (12) de saisie, les moyens de mémorisation contenant un taux de conversion entre une première monnaie et une deuxième monnaie, caractérisé en ce que le procédé comprend :
- une étape de saisie, puis de mise en mémoire d'un montant d'achat dans la première monnaie ;
- une étape de saisie, puis de mise en mémoire d'un montant versé dans la deuxième monnaie, la valeur de ce montant étant supérieure à celle du montant d'achat selon ledit taux de conversion ;
- une étape, déclenchée par saisie, de calcul puis d'affichage de la somme à rendre dans la première monnaie, en fonction du taux de conversion, du montant de l'achat dans la première monnaie et de la somme versée dans la deuxième monnaie.

## Description

La présente invention concerne un procédé et un dispositif de calcul et conversion de monnaie utilisé notamment pour réaliser une transaction commerciale entre deux utilisateurs, un acheteur et un vendeur, possédant des monnaies différentes.

Il est connu dans l'art antérieur, notamment dans la demande de brevet FR 2 756 949, un convertisseur Euro/Francs et Francs/Euro. Ce convertisseur présente l'avantage de posséder deux zones d'affichage permettant de visualiser simultanément le montant à convertir et le montant converti correspondant. Cependant, ce convertisseur ne permet pas de calculer rendu de monnaie en Euro pour une transaction commerciale réalisée en Euro, mais payée en Francs.

La présente invention a donc pour objet de pallier les inconvénients de l'art antérieur en proposant dans un premier but un procédé permettant de déterminer automatiquement le rendu de monnaie à effectuer dans une première monnaie pour une transaction commerciale affichée dans cette première monnaie et payée dans une deuxième monnaie.

Cet objectif est atteint par un procédé de calcul et conversion de rendu de monnaie selon la revendication 1.

Des développements supplémentaires de l'invention sont décrits dans les revendications 2 à 5.

Un deuxième but de l'invention consiste à proposer un dispositif permettant de déterminer automatiquement le rendu de monnaie à effectuer dans une première monnaie pour une transaction commerciale affichée dans cette première monnaie et payée dans une deuxième monnaie.

Cet objectif est atteint par un dispositif de calcul et conversion de rendu de monnaie selon la revendication 6.

Des développements supplémentaires de l'invention sont décrits dans les revendications 7 à 10.

L'invention, avec ses caractéristiques et avantages, ressortira plus clairement à la lecture de la description faite en référence aux dessins annexés dans lesquels :
- la figure 1 représente un schéma du dispositif de conversion selon l'invention
- les figures 2A et 2B représentent une variante de réalisation du dispositif selon l'invention suivant deux positions.

Afin de mieux comprendre l'objet de la présente invention, il convient de rappeler le problème technique que le dispositif de conversion, qui va être décrit, se propose de résoudre.

Selon l'art antérieur, les dispositifs de conversion de monnaie permettent uniquement de convertir un montant établi dans une première monnaie en un montant selon une deuxième monnaie. Le calcul consiste donc en une multiplication d'un des deux montants par le taux de change correspondant. Cependant, une transaction commerciale s'effectue la plupart du temps avec une seule monnaie, soit celle de l'acheteur, soit plus généralement celle du vendeur. La conversion n'intervient que pour vérifier le montant de l'achat dans la monnaie qui n'est pas utilisée dans la transaction.

Ainsi, selon l'art antérieur les opérations de rendu de monnaie sont réalisées dans la monnaie qui a été versée ce qui nécessite, soit que l'acheteur dispose de la somme , correspondant au montant de l'achat, dans la monnaie du vendeur soit que le vendeur dispose des devises de l'acheteur pour rendre la monnaie sur le montant versé par l'acheteur pour régler le montant de l'achat.

Le dispositif et le procédé selon l'invention permettent au contraire de réaliser une transaction commerciale quelle que soit la monnaie utilisée par l'acheteur pour régler le montant de l'achat dans la monnaie du vendeur.

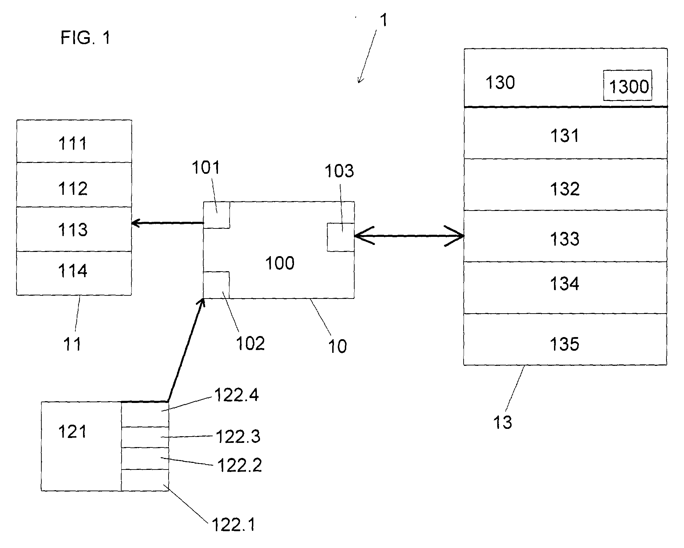

Le dispositif (1) selon l'invention va à présent être décrit en référence à la figure 1. Selon l'invention, le dispositif de conversion comprend essentiellement un dispositif (10) à microprocesseur (100) gérant, par l'intermédiaire d'un premier circuit d'interface (101), des moyens d'affichage (11). Le dispositif (10) à microprocesseur comprend une deuxième interface (102) permettant de recevoir des informations provenant de moyens (12) d'interaction entre l'utilisateur et le dispositif (1) de conversion. Ces informations sont représentatives des actions de l'utilisateur sur le dispositif (1). Une troisième interface (103) permet au dispositif (10) à microprocesseur (100) de gérer des moyens (13) de mémorisation, notamment pour mémoriser dans une zone (130) mémoire déterminée le système d'exploitation (1300) du dispositif (1) de conversion.

Les moyens (12) d'interaction comprennent, par exemple, un clavier (121) numérique ainsi que des touches permettant d'activer les calculs arithmétiques standard tels que l'addition, la soustraction, la multiplication, la division et la totalisation. Les moyens (12) d'interaction comprennent également des moyens (122) déclenchant des procédures ou des routines déterminées sur un système d'exploitation (1300) du dispositif qui seront décrites ultérieurement. Le clavier peut être remplacé par un écran tactile ou tout autre dispositif permettant, notamment à un utilisateur, de saisir des valeurs numériques et de valider ces saisies.

Les moyens d'affichage (11) comprennent une pluralité de zones (111 à 114) d'affichage pour visualiser notamment, les différentes valeurs numériques utilisées dans la transaction commerciale entre l'acheteur et le vendeur. Les moyens d'affichage comprennent, par exemple, un écran à cristaux liquides ou un écran LCD suffisamment grand pour permettre la matérialisation de plusieurs zones distinctes d'affichage. Dans une variante de réalisation, les moyens d'affichage comprennent un écran du même type que précédemment mais constituant une seule fenêtre d'affichage. L'obtention de différentes zones d'affichage est obtenu par des moyens de défilement, par exemple, des boutons, permettant d'afficher successivement dans la fenêtre d'affichage les différentes zones d'affichage. Dans cette variante de réalisation, le contenu des différentes zones d'affichage est conservé dans une zone (non représentée) de mémoire spécifique des moyens de mémorisation. Dans une autre variante de réalisation, des moyens de visualisation annexes peuvent être ajoutés au dispositif par l'intermédiaire d'une connectique adaptée connue en soit. Ces moyens de visualisation annexe comprennent par exemple un écran de grande dimension par rapport aux moyens de visualisation du dispositif permettant de visualiser le contenu de la zone d'affichage en cours d'utilisation.

Les moyens (13) de mémorisation comprennent en plus de la zone (130) mémoire dans laquelle est stocké le système d'exploitation (1300), une pluralité de registre permettant de mémoriser les différentes valeurs calculées par le système d'exploitation (1300) ou saisies par l'utilisateur, en l'occurrence le vendeur, et utilisées dans le processus de conversion selon l'invention.

Le dispositif selon l'invention peut également être pourvu d'une connexion de type connu, par exemple de type H5 CONN-H5, permettant de connecter le dispositif à un terminal de type ordinateur, caisse enregistreuse, téléphone portable comportant une connexion de type série CONN-D9.

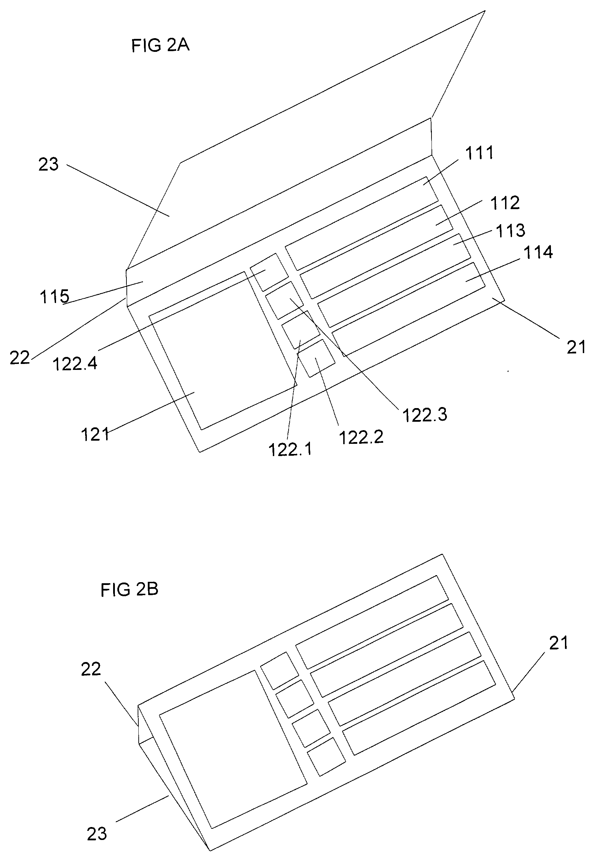

Dans une variante de réalisation représentée aux figures 2A et 2B, le dispositif (1) comprend une pluralité de panneaux (21 à 23) articulés entre eux part un de leur bord longitudinal. Le premier panneau (21) comprend les moyens (121, 122.1 à 122.4) d'interaction décrit précédemment et les première, deuxième, troisième et quatrième (111 à 114) zones d'affichage décrites précédemment. Ce premier panneau (21) peut également comprendre dans son épaisseur le dispositif (10) à microprocesseur et les moyens (13) de mémorisation. Un deuxième panneau (22) articulé sur un bord longitudinal du premier panneau (21) comprend une cinquième zone (115) d'affichage également reliée à la première interface (101, fig. 1) du dispositif à microprocesseur. Cette cinquième zone d'affichage (115) est destinée à la répétition de l'affichage d'une des quatre première zone d'affichage (111 à 114). Selon l'invention, la zone d'affichage répétée dans la cinquième zone d'affichage correspondant à la zone d'affichage en cours d'utilisation, c'est-à-dire la zone d'affichage dans laquelle une saisie est en cour ou la zone d'affichage utilisée pour afficher un résultat de calcul ou une sélection de valeur de taux de conversion. Un troisième panneau (23) articulé sur un bord longitudinal du deuxième panneau (22) constitue un panneau de protection du premier panneau (21) lorsque les deuxième et troisième panneaux (22, 23) sont rabattus sur le premier panneau (21). Ainsi en position dite fermée, le dispositif (1) n'est pas en service et le premier panneau (21) est protégé par le troisième panneau (23). En position dite ouverte, le troisième panneau (23) pivote d'environ 360° par rapport à sa position initiale (fermée) et forme une surface d'appui du dispositif (1). Le deuxième panneau (22) pivote d'environ 270° par rapport à sa position initiale pour être sensiblement perpendiculaire au troisième panneau (23). Ainsi dans cette position ouverte, le vendeur peut utiliser les moyens de sélection et les moyens d'affichage du premier panneau (21) et l'acheteur peut suivre le déroulement des opérations du vendeur par l'intermédiaire de l'affichage de la cinquième zone (115) d'affichage.

La transaction commerciale entre le vendeur et l'acheteur commence par la détermination du taux de change pour convertir une première monnaie, par exemple la monnaie du vendeur, dans une deuxième monnaie, par exemple la monnaie de l'acheteur. Dans une première variante de réalisation le taux de conversion est choisi librement par le vendeur. Dans ce cas, le taux de conversion choisi est saisi par le vendeur par l'intermédiaire du clavier (121). La valeur du taux saisie est simultanément affichée, par l'intermédiaire d'une procédure d'affichage du système d'exploitation, dans une première zone (111) d'affichage par l'intermédiaire des première et deuxième interfaces (101, 102) du dispositif (10) à microprocesseur et du système d'exploitation. En actionnant un premier moyen (122.1) de déclenchement, par exemple un premier bouton, une première procédure du système d'exploitation déclenche la mémorisation de la valeur saisie et l'affiche dans un premier registre (131) des moyens de mémorisation.

Dans une deuxième variante un taux pré-établi est mémorisé dans le premier registre (131). Ce taux pré-programmé est affiché dans la première zone (111) d'affichage par la procédure d'affichage du système d'exploitation déclenché par l'actionnement du premier moyen (122.1) de déclenchement.

Dans une troisième variante, le premier registre (131) comprend une liste, par exemple ordonnée, d'une pluralité de taux de change pré-programmés. La sélection de l'un des taux de change s'effectue, par exemple, par actionnement successif d'un moyen (non représenté) de défilement. Chaque actionnement provoque l'affichage, par l'intermédiaire de la procédure d'affichage du système d'exploitation, dans la première zone (111) d'affichage, d'un taux de change pré-grogrammé de la liste mémorisée, par exemple dans l'ordre établi, jusqu'à ce que le vendeur s'arrête sur le taux de change choisi. La validation de ce taux de change choisi, et donc affiché dans la première zone (111) d'affichage, est déclenché par l'actionnement du premier moyen (122.1) de déclenchement.

A ce stade de la transaction, le taux de change est choisi pour toute la durée de la transaction entre l'acheteur et le vendeur.

Ensuite, le vendeur utilise le clavier pour saisir le montant de l'achat effectué par l'acheteur, dans la monnaie du vendeur. Dans cette phase, le système d'exploitation (1300) réagit aux actions du vendeur sur le clavier de la même façon qu'une calculatrice standard. Ainsi, des opérations arithmétiques peuvent être réalisées. La procédure d'affichage du système d'exploitation provoque également l'affichage, simultanément à la saisie, dans une deuxième zone (112) d'affichage des moyens d'affichage, des valeurs saisies par le vendeur et éventuellement des valeurs calculées par le dispositif (10) à microprocesseur lorsque des touches du clavier, correspondant à des opérations arithmétiques, sont enfoncées.

Lorsque le montant total de l'achat de l'acheteur dans la monnaie du vendeur est établi et définitif, celui-ci est validé par le vendeur par une action sur un deuxième moyen (122.2) de déclenchement. L'actionnement de ce deuxième moyen (122.2) de déclenchement provoque l'appel d'une deuxième routine du système d'exploitation qui déclenche, premièrement la mémorisation du montant total de l'achat dans une deuxième registre, et deuxièmement, par exemple, le calcul par l'intermédiaire du taux de conversion mémorisé ou sélectionné dans le premier registre, du montant de l'achat dans la monnaie de l'acheteur et simultanément l'affichage dans une troisième zone (113) d'affichage du résultat du calcul. Ainsi, l'acheteur connaît par l'affichage de la troisième zone (113) d'affichage, le montant qu'il doit régler dans sa monnaie. Le calcul réalisé est une conversion du montant de l'achat dans la monnaie du vendeur en un montant dans la monnaie de l'acheteur. Cette conversion consiste donc en la multiplication du taux de change mémorisé ou sélectionné dans le premier registre (131) par le montant de l'achat mémorisé dans le deuxième registre (132).

L'étape suivante de la transaction consiste dans le règlement du montant de l'achat par l'acheteur et éventuellement par le rendu de monnaie par le vendeur sur la somme versée par l'acheteur. De façon originale, l'acheteur utilise sa monnaie et non celle du vendeur pour régler le montant de l'achat. Par contre, le vendeur effectuera, s'il y a lieu, le rendu de monnaie dans sa monnaie et non dans celle de l'acheteur.

Lorsque le vendeur reçoit le montant versé par l'acheteur dans la monnaie de l'acheteur, il saisit le montant reçu sur le clavier. Comme précédemment, la procédure d'affichage du système d'exploitation provoque simultanément l'affichage du montant saisi, par exemple sur une quatrième zone (114) d'affichage des moyens (11) d'affichage. La validation du montant saisi est réalisée en actionnant une troisième moyen (122.3) de déclenchement, comprenant par exemple un bouton poussoir. L'actionnement de ce bouton poussoir déclenche une troisième procédure du système d'exploitation qui provoque premièrement, la mémorisation dans un troisième registre (133) de la valeur du montant versé par l'acheteur, deuxièmement le calcul du rendu de monnaie dans la monnaie du vendeur, et troisièmement, par exemple, l'affichage du rendu de monnaie, par exemple dans la troisième zone (113) d'affichage, en remplacement du montant de l'achat dans la monnaie de l'acheteur. L'affichage du rendu de monnaie peut, par exemple, se déclenche uniquement après actionnement d'un quatrième moyen (122.4) de déclenchement. Dans ce cas, la valeur correspondant au rendu de monnaie est mémorisée dans une quatrième registre (134).

Les opérations de calcul réalisées par la troisième procédure consiste, par exemple, premièrement à convertir le montant versé par l'acheteur dans la monnaie du vendeur, en divisant la valeur du montant versé mémorisé dans le troisième registre (133) par le taux de change mémorisé ou sélectionné dans le premier registre (131). Le résultat de cette conversion peut être mémorisé dans un cinquième registre (135). Le montant de l'achat dans la monnaie du vendeur mémorisée dans le deuxième registre (132) est alors retranché du résultat de la conversion éventuellement mémorisé dans le quatrième registre. Le résultat de cette soustraction correspondant au rendu de monnaie est alors affiché, par la procédure d'affichage du système d'exploitation, pour permettre au vendeur d'effectuer le rendu de la monnaie avec sa propre monnaie.

Ainsi, on comprend que le dispositif de conversion selon l'invention permet de régler à partir d'opérations simples de saisie, une transaction commerciale entre un acheteur et un vendeur, dans laquelle chacun ne dispose pas de la monnaie de l'autre.

Dans une autre variante de réalisation, la validation des opérations de saisie par les moyens (122.1 à 122.3) de déclenchement, peut être corrigée par l'intermédiaire d'une procédure de correction du système d'exploitation (1300) du dispositif (1) de conversion. Selon l'invention cette procédure de correction est déclenchée par l'actionnement de moyens (123) de correction faisant partie des moyens (12) d'interaction. Ces moyens (123) de correction comprennent, par exemple au, moins une touche qui, lorsqu'elle est enfoncée, déclenche la procédure de correction. Cette procédure de correction consiste à effacer le contenu du premier ou deuxième ou encore troisième registres contenant la valeur mémorisée lors de la validation correspondante et d'autoriser une nouvelle saisie de la valeur.

Dans une autre variante de réalisation, le déclenchement de la troisième procédure permettant le calcul du rendu de monnaie comprend une sous routine de vérification du montant versé. Cette sous routine a pour but d'indiquer si le montant versé par l'acheteur est suffisant pour régler le montant de l'achat. Cette sous-routine de vérification consiste en un test sur le signe de la différence entre le montant versé par l'acheteur, converti dans la monnaie du vendeur et le montant de l'achat. Si le résultat de cette différence est positif, cela signifie que le montant versé est suffisant et la valeur de ce résultat correspond au rendu de monnaie. Si au contraire, le résultat de cette différence est négatif, cela signifie que le montant versé est insuffisant et que la valeur absolue du résultat correspond au solde à verser.

Dans cette variante de réalisation, le résultat, correspondant au solde à verser, peut être affiché, par exemple, sur la troisième zone (113) d'affichage en remplacement de la valeur du montant de l'achat dans la monnaie de l'acheteur.

Dans cette variante de réalisation, le dispositif (1) comprend une pluralité de panneaux (21 à 23) articulés entre eux par un de leur bord longitudinal, un premier panneau (21) comprend les moyens (12) d'interaction, les première, deuxième, troisième et quatrième (111 à 114) zone d'affichage, un deuxième panneau (22) articulé sur un bord longitudinal du premier panneau (21) comprend une cinquième zone (115) d'affichage permettant la répétition de l'affichage d'une des quatre première zone d'affichage, un troisième panneau (23) articulé sur un bord longitudinal du deuxième panneau (22) constituant, dans une première position, un panneau de protection du premier panneau (21) lorsque les deuxième et troisième panneaux (22, 23) sont rabattus sur le premier panneau (21) et dans une deuxième position, une surface de support lorsque le troisième panneau (23) pivote autour du premier panneau (21).

Un premier objectif de l'invention est atteint par un procédé de calcul et conversion de rendu de monnaie utilisable par un dispositif de calcul comprenant des moyens (13) de mémorisation, des moyens (11) d'affichage et des moyens (12) de saisie, les moyens de mémorisation contenant un taux de conversion entre une première monnaie et une deuxième monnaie, caractérisé en ce que le procédé comprend :
- une étape de saisie, puis de mise en mémoire d'un montant d'achat dans la première monnaie ;
- une étape de saisie, puis de mise en mémoire d'un montant versé dans la deuxième monnaie, la valeur de ce montant étant supérieure à celle du montant d'achat selon ledit taux de conversion ;
- une étape, déclenchée par saisie, de calcul puis d'affichage de la somme à rendre dans la première monnaie, en fonction du taux de conversion, du montant de l'achat dans la première monnaie et de la somme versée dans la deuxième monnaie.

Selon une particularité, l'étape de calcul de la somme à rendre comprend une étape de vérification que la valeur du montant versé est au moins égale à celle du montant de l'achat selon le taux de conversion.

Selon une autre particularité, une étape de calcul puis d'affichage sur des moyens d'affichage de la somme à verser correspondante dans la deuxième monnaie est exécutée après l'étape de saisie du montant de l'achat.

Selon une autre particularité, si, après l'étape de vérification, la valeur du montant versé selon le taux de conversion est inférieure à la valeur du montant de l'achat, un message ou un signal est généré avertissant l'utilisateur de l'insuffisance du montant versé.

Selon une autre particularité le procédé de calcul et conversion de rendu de monnaie comprend après chaque étape de mémorisation une étape de correction consistant à effacer la valeur mémorisée puis à saisir une nouvelle valeur.

Un deuxième but de l'invention consiste à proposer un dispositif permettant de déterminer automatiquement le rendu de monnaie a effectuer dans une première monnaie pour une transaction commerciale affichée dans cette première monnaie et payée dans une deuxième monnaie.

Cet objectif est atteint par un dispositif de calcul et conversion de rendu de monnaie comprenant des moyens (13) de mémorisation, des moyens (11) d'affichage et des moyens (12) d'interaction avec un utilisateur, caractérisé en ce que les moyens (13) de mémorisation comprennent une pluralité de registres (131 à 135), un premier registre (131) comprenant un taux de conversion entre une première monnaie et une deuxième monnaie, un deuxième registre (132) permettant de mémoriser une valeur saisie et validée sur les moyens (12) d'interaction et correspondant à un montant d'achat dans la première monnaie, un troisième registre (133) permettant de mémoriser une valeur saisie et validée sur les moyens (12) d'interaction et correspondant à un montant versé dans la deuxième monnaie et d'une valeur supérieure à celle du montant d'achat selon ce taux de conversion, des moyens (10, 1300) de calcul permettant de déterminer à partir des valeurs contenues dans les trois registres (131 à 133), le montant à rendre dans la première monnaie.

Selon une particularité, les moyens (11) d'affichage comprennent une première zone (111) permettant l'affichage de la valeur contenue dans le premier registre (131) des moyens (13) de mémorisation et correspondant au taux de conversion entre la première et la deuxième monnaie, une deuxième zone d'affichage (112) permettant l'affichage de la valeur contenue dans le deuxième registre (132) des moyens de mémorisation et correspondant au montant de l'achat dans la première monnaie, une troisième zone (113) d'affichage permettant l'affichage de la valeur calculée par les moyens de calcul et correspondant au montant à rendre dans la première monnaie et une quatrième zone (114) d'affichage permettant l'affichage de la valeur contenue dans le troisième registre (133) et correspondant au montant versé dans la deuxième monnaie.

Selon une autre particularité, les moyens (12) d'interaction comprennent au moins une touche (123) de correction qui provoque l'effacement de l'un des registres des moyens (13) de mémorisation afin d'y saisir une nouvelle valeur par l'intermédiaire des moyens(12) d'interaction.

Selon une autre particularité, les différentes zones d'affichage (111 à 113) des moyens (11) d'affichage sont constituées d'un seul écran comprenant une pluralité de fenêtres et/ou d'un écran dans lesquels sont affichées successivement plusieurs fenêtres, chaque fenêtre correspondant chacune à une zone d'affichage.

Selon une autre particularité, le dispositif de calcul et conversion de rendu de monnaie comprend une pluralité de panneaux (21 à 23) articulés entre eux par un bord longitudinal, un premier panneau (21) comprend les moyens (12) d'interaction, les première, deuxième, troisième et quatrième (114 à 115) zones d'affichage, un deuxième panneau (22) articulé sur un bord longitudinal du premier panneau (21) comprend une cinquième zone (115) d'affichage permettant la répétition de l'affichage d'une des quatre premières zones (111 à 114) d'affichage, un troisième panneau (23) articulé sur un bord longitudinal du deuxième panneau (22) constituant, dans une première position, un panneau de protection du premier panneau (21) lorsque les deuxième et troisième panneaux (22, 23) sont rabattus sur le premier panneau (21) et dans une deuxième position, une surface de support lorsque le troisième panneau (23) pivote autour du premier panneau (21).

Un exemple de programme comprenant l'ensemble des procédures attachées à chaque moyen de déclenchement est fourni en annexe à titre d'exemple non limitatif.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

### ANNEXE

### Exemple de Programme

L'exemple de programme ci-après illustre le fonctionnement interne des quatre registres (131 à 134) supplémentaires de la calculatrice. Les sources réalisées en quick basic 4.5, peuvent être retranscrites aisément en language C, C⁺⁺, ou en tout autre language, hexadécimal, assembleur, interprété, semi-interprété, ainsi que tous autres languages spécialisés pour les microcontrôleurs.

### Programme source en Quick Basic 4.5

Dans cet exemple nous prenons deux devises le Franc Français (B) et le Dollar US

'Liste des Variables en double précision des différents registres de la calculatrice
- 'vlc#: = Valeur du change
- 'maup#: = Montant de l'achat dans la monnaie du vendeur
- 'mdve#: = Montant en versé dans la monnaie de l'acheteur
- 'vaup#: = vlc# * maup#
- 'vlad#: = maud# / vlc#
- 'edd#: = mdve# / vlc#
- 'total#: = edd# - maup#

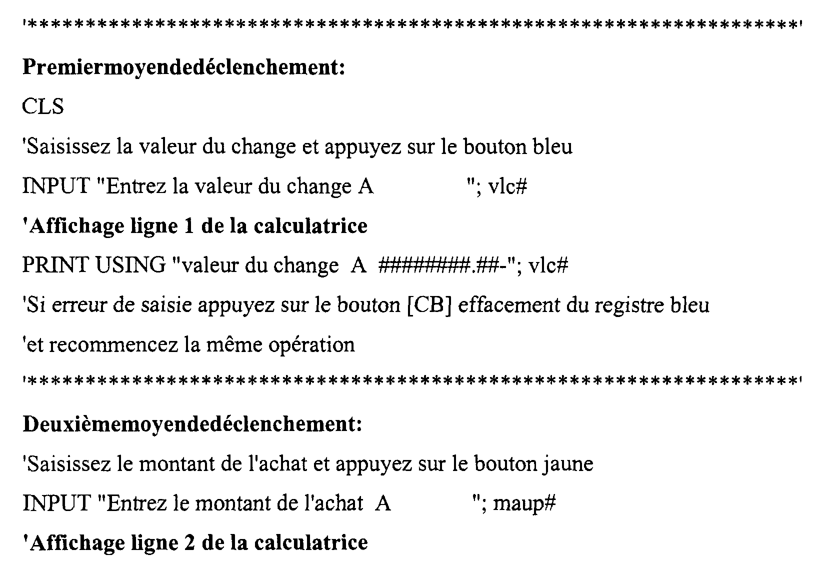

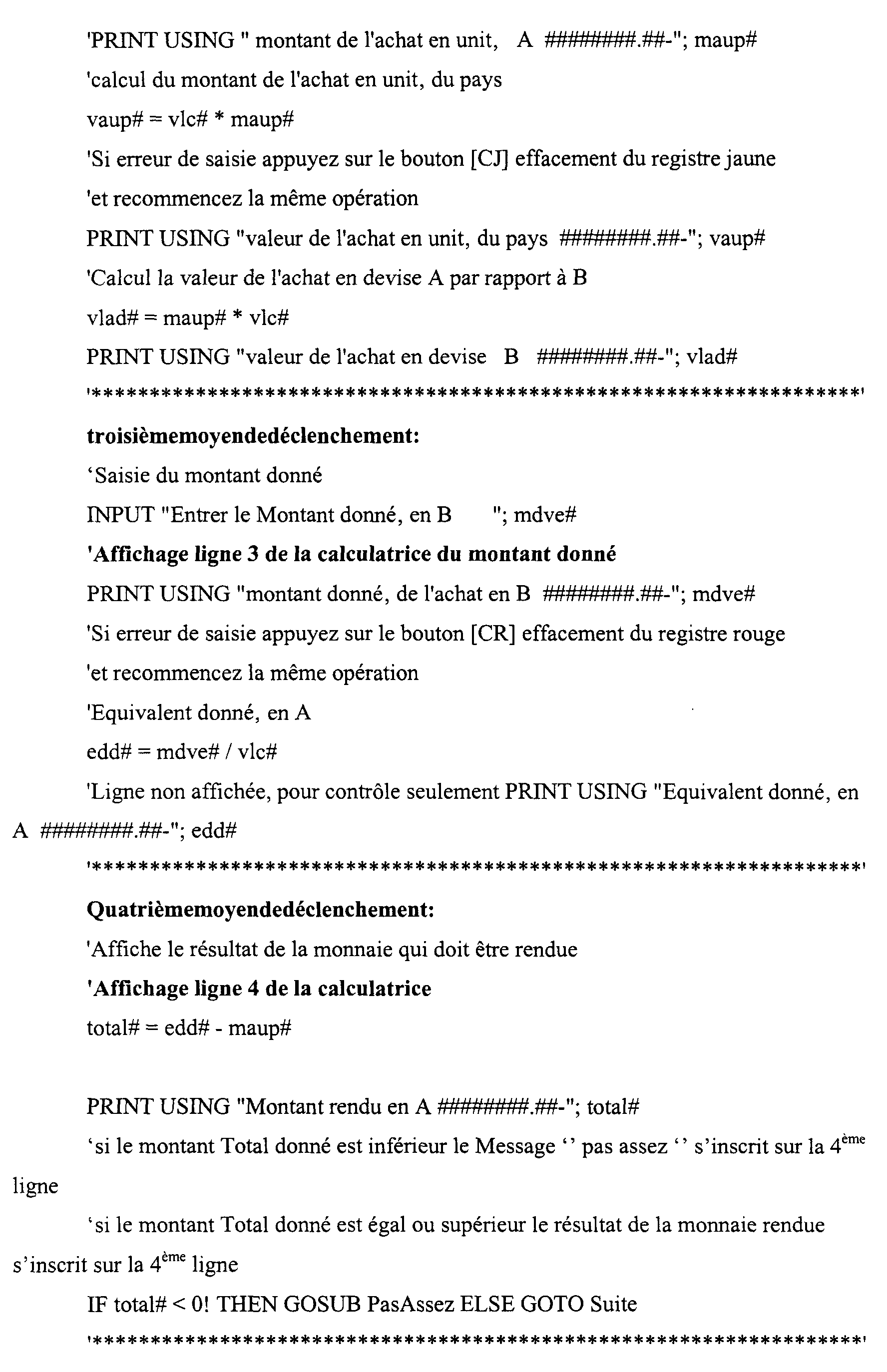

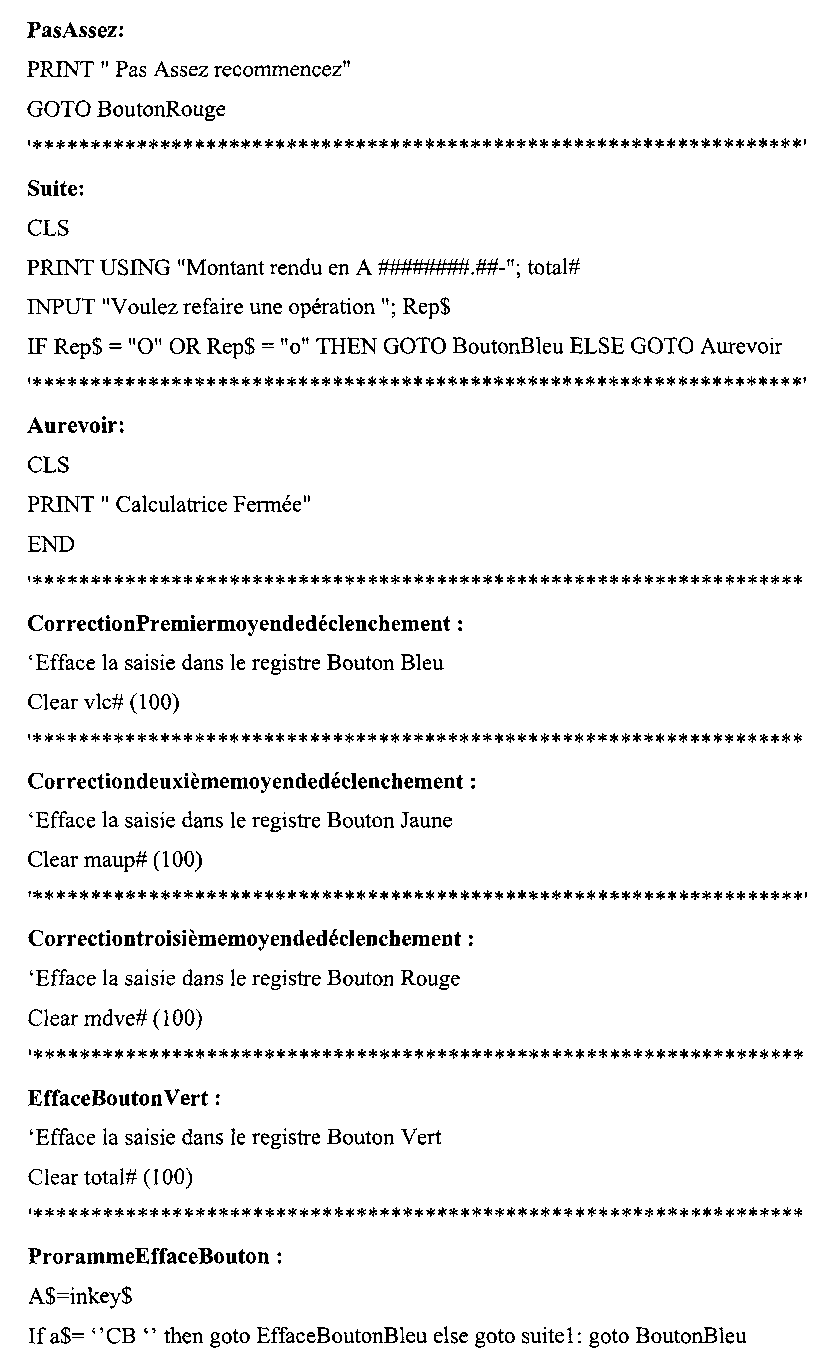

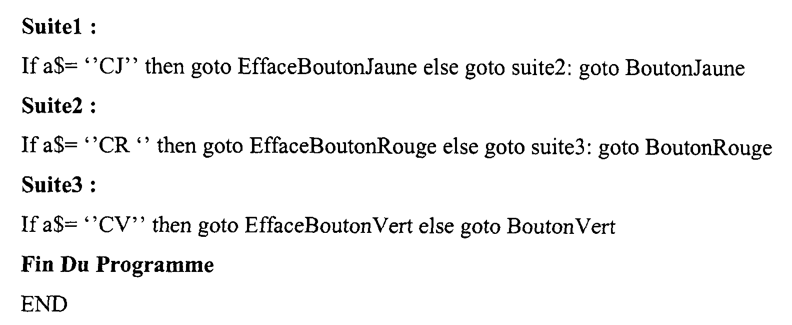

## Revendications

1. Procédé de calcul et conversion de rendu de monnaie utilisable par un dispositif de calcul comprenant des moyens (13) de mémorisation, des moyens (11) d'affichage et des moyens (12) de saisie, les moyens de mémorisation contenant un taux de conversion entre une première monnaie et une deuxième monnaie, **caractérisé en ce que** le procédé comprend :
- une étape de saisie, puis de mise en mémoire d'un montant d'achat dans la première monnaie ;
- une étape de saisie, puis de mise en mémoire d'un montant versé dans la deuxième monnaie, la valeur de ce montant étant supérieure à celle du montant d'achat selon ledit taux de conversion ;
- une étape, déclenchée par saisie, de calcul puis d'affichage de la somme à rendre dans la première monnaie, en fonction du taux de conversion, du montant de l'achat dans la première monnaie et de la somme versée dans la deuxième monnaie.

2. Procédé de calcul et conversion de rendu de monnaie selon la revendication 1, **caractérisé en ce que** l'étape de calcul de la somme à rendre comprend une étape de vérification que la valeur du montant versé est au moins égale à celle du montant de l'achat selon le taux de conversion.

3. Procédé de calcul et conversion de rendu de monnaie selon la revendication 1 ou 2, **caractérisé en ce qu'**une étape de calcul puis d'affichage sur des moyens d'affichage de la somme à verser correspondante dans la deuxième monnaie est exécutée après l'étape de saisie du montant de l'achat.

4. Procédé de calcul et conversion de rendu de monnaie selon la revendication 2, **caractérisé en ce que** si, après l'étape de vérification, la valeur du montant versé selon le taux de conversion est inférieure à la valeur du montant de l'achat, un message ou un signal est généré avertissant l'utilisateur de l'insuffisance du montant versé.

5. Procédé de calcul et conversion de rendu de monnaie selon l'une des revendications 1 à 4, **caractérisé en ce qu'**il comprend après chaque étape de mémorisation une étape de correction consistant à effacer la valeur mémorisée puis à saisir une nouvelle valeur.

6. Dispositif de calcul et conversion de rendu de monnaie comprenant des moyens (13) de mémorisation, des moyens (11) d'affichage et des moyens (12) d'interaction avec un utilisateur, **caractérisé en ce que** les moyens (13) de mémorisation comprennent une pluralité de registres (131 à 135), un premier registre (131) comprenant un taux de conversion entre une première monnaie et une deuxième monnaie, un deuxième registre (132) permettant de mémoriser une valeur saisie et validée sur les moyens (12) d'interaction et correspondant à un montant d'achat dans la première monnaie, un troisième registre (133) permettant de mémoriser une valeur saisie et validée sur les moyens (12) d'interaction et correspondant à un montant versé dans la deuxième monnaie et d'une valeur supérieure à celle du montant d'achat selon ce taux de conversion, des moyens (10, 1300) de calcul permettant de déterminer à partir des valeurs contenues dans les trois registres (131 à 133), le montant à rendre dans la première monnaie.

7. Dispositif de calcul et conversion de rendu de monnaie selon la revendication 6, **caractérisé en ce que** les moyens (11) d'affichage comprennent une première zone (111) permettant l'affichage de la valeur contenue dans le premier registre (131) des moyens (13) de mémorisation et correspondant au taux de conversion entre la première et la deuxième monnaie, une deuxième zone d'affichage (112) permettant l'affichage de la valeur contenue dans le deuxième registre (132) des moyens de mémorisation et correspondant au montant de l'achat dans la première monnaie, une troisième zone (113) d'affichage permettant l'affichage de la valeur calculée par les moyens de calcul et correspondant au montant à rendre dans la première monnaie et une quatrième zone (114) d'affichage permettant l'affichage de la valeur contenue dans le troisième registre (133) et correspondant au montant versé dans la deuxième monnaie.

8. Dispositif de calcul et conversion de rendu de monnaie, selon la revendication 6 ou 7, **caractérisé en ce que** les moyens (12) d'interaction comprennent au moins une touche (123) de correction qui provoque l'effacement de l'un des registres des moyens (13) de mémorisation afin d'y saisir une nouvelle valeur par l'intermédiaire des moyens(12) d'interaction.

9. Dispositif de calcul et conversion de rendu de monnaie, selon la revendication 7, **caractérisé en ce que** les différentes zones d'affichage (111 à 113) des moyens (11) d'affichage sont constituées d'un seul écran comprenant une pluralité de fenêtres et/ou d'un écran dans lesquels sont affichées successivement plusieurs fenêtres, chaque fenêtre correspondant chacune à une zone d'affichage.

10. Dispositif de calcul et conversion de rendu de monnaie selon la revendication 7 à 9, **caractérisé en ce qu'**il comprend une pluralité de panneaux (21 à 23) articulés entre eux par un bord longitudinal, un premier panneau (21) comprend les moyens (12) d'interaction, les première, deuxième, troisième et quatrième (114 à 115) zones d'affichage, un deuxième panneau (22) articulé sur un bord longitudinal du premier panneau (21) comprend une cinquième zone (115) d'affichage permettant la répétition de l'affichage d'une des quatre premières zones (111 à 114) d'affichage, un troisième panneau (23) articulé sur un bord longitudinal du deuxième panneau (22) constituant, dans une première position, un panneau de protection du premier panneau (21) lorsque les deuxième et troisième panneaux (22, 23) sont rabattus sur le premier panneau (21) et dans une deuxième position, une surface de support lorsque le troisième panneau (23) pivote autour du premier panneau (21).
